# EUROPEAN PATENT SPECIFICATION

(11) **EP 1 179 445 B1**
(45) Date of publication and mention of the grant of the patent: **25.10.2006**
(21) Application number: 01305825.0
(22) Date of filing: 05.07.2001
(51) Int. Cl.: B60K 15/03, B29C 65/02

(54) **Plastic fuel tank having an arrangement for welding a component part in a fuel impermeable manner**
Kunststoffkraftstofftank mit Anordnung zum kraftstoffdichten Anschweissen einer Komponente
Résevoir de carburant en matière plastique incluant un arrangement pour souder des composants d'une manière imperméable au carburant

(30) Priority: 21.07.2000 JP 2000220300; 26.12.2000 JP 2000394659
(43) Date of publication of application: 13.02.2002
(73) Proprietor: Yachiyo Kogyo Kabushiki Kaisha, Sayama-shi, Saitama-ken (JP)
(72) Inventor: Matsuzaki, Toru, Yachiyo Kogyo Kabushiki Kaisha, Shioya-gun, Tochigi-ken (JP); Seko, Mitsuhiro, Yachiyo Kogyo Kabushiki Kaisha, Shioya-gun, Tochigi-ken (JP); Nakamura, Kazuhiro, Yachiyo Kogyo Kabushiki Kaisha, Shioya-gun, Tochigi-ken (JP); Sato, Shoji, Yachiyo Kogyo Kabushiki Kaisha, Shioya-gun, Tochigi-ken (JP)
(74) Representative: Rees, Alexander Ellison

(56) References cited:
- EP-A- 0 947 368
- US-A- 5 404 907
- US-A- 5 601 205

## Description

### TECHNICAL FIELD

The present invention relates to a plastic fuel tank, and in particular to a plastic fuel tank including a component part which is secured in a hole of a tank main body by thermal welding.

### BACKGROUND OF THE INVENTION

There is a growing trend to use plastic fuel tanks made of blow molded plastic material owing to their simplicity in avoiding rusting and reducing weight, and achieving a high productivity. High density polyethylene (HDPE) typically used for blow molding has a high HC (hydrocarbon) permeability or has a low barrier capability so that the material is not suitable for use in fuel tanks as it is because of the possibility of polluting the atmosphere.

It is desirable to use a high barrier capability material such as ethylene vinyl alcohol copolymer (EVOH) when permeation of HC needs to be controlled. Such a so-called gasoline barrier material is not only expensive but also has a relatively low resistance to impacts. Therefore, it is not practical to make the entire gasoline tank with a gasoline barrier material in view of the cost and mechanical strength.

A component part which is molded separately, such as a filter neck and a breather pipe, is typically required to be attached to a blow molded fuel tank by thermal welding. However, a gasoline barrier material is unsuitable for thermal welding. If the component part is made of gasoline barrier material, it is difficult to attach the component part to be tank main body with an adequate strength.

To eliminate such a problem, it has been proposed to form the tank main body with a laminated material having a film of gasoline barrier material sandwiched between common plastic material such as high density polyethylene, and the component part mostly by gasoline barrier material but also be common plastic material in the part to be welded by using coinjection.

This proposal can eliminate the problem associated with the bonding strength, but because the bonded part which is made of common plastic material having a low barrier capability is directly exposed to the environment inside and outside the tank, the permeation of HC through such bonded part may create a problem.

It is conceivable to make the component part by using weldable material and cover it with gasoline barrier material. However, because the end surfaces of the weldable material and gasoline barrier material are located one next to each other on the welding surface for the fuel tank, the gasoline barrier which would not merge with the fuel tank may interfere with the thermal welding and an adequate mechanical strength of the welding connection for the component part may not be achieved.

EP-A-0947368 discloses a plastic fuel tank, comprising a main body having a laminated structure including a layer made of gasoline barrier material, an outer layer made of weldable plastic material and a hole formed in said main body so as to communicate an interior and exterior of said tank main body with each other; and a component part fitter in said hold, said component part including a first part made of gasoline barrier material extending across said component part so as to substantially separate the interior and exterior of said tank main body from each other and a second part made of weldable plastic material provided in a peripheral part of said component part at which said component part is welded to a part of said outer layer of said tank main body surrounding said hole.

### BRIEF SUMMARY OF THE INTENTION

In view of such problems of the prior art, a primary object of the present invention is to provide a plastic fuel tank which provides both an adequate bonding strength and a barrier capability even when a component part is secured in a hole provided in the tank main body.

A second object of the present invention is to provide a plastic fuel tank including a component part secured in a hole provide in the tank main body which provides both a high mechanical strength and a low HC permeability.

A third object of the present invention is to provide a plastic fuel tank including a component part secured in a hole provided in the tank main body which can be manufactured economically.

A fourth object of the present invention is to provide a plastic fuel tank including a component part secured in a hole provided in the tank main body which is easy to manufacture.

According to the present invention, such objects can be accomplished by providing a plastic fuel tank comprising a main body having a laminated structure including a layer made of gasoline barrier material, an outer layer made of weldable plastic material and a hole formed in said main body so as to communicate the interior and exterior of said tank main body with each other; and a component part fitted in said hole, said component part including a first part made of gasoline barrier material extending across said component part so as to substantially separate the interior and exterior of said tank main body from each other and a second part made of weldable plastic material provided in a peripheral part of said component part at which said second part is welded to a part of said outer layer of said tank main body surrounding said hole characterised in that: said first part of said component part made of the gasoline barrier material includes an outer or inner layer of said component part which is formed over said second part and extends to the welding surface of the tank main body.

Thus, because the parts at which the fuel tank main body and component part are welded to each other are made of common plastic material while the parts which are directly exposed to HC gas or the atmosphere are covered by gasoline barrier material, the bonding strength and HC impermeability can be achieved at the same time without any compromise. It was discovered that the California evaporated emission standards (LEV-II) can be met if the gasoline barrier material of the component part has a HC permeability coefficient of 15 g-mm/m² per day or less at 40°C.

A seal member may be interposed between a peripheral part of the hole and an outer circumferential surface of the component part to seal off the welded part from the interior of the tank main body. This allows the section of the common plastic material on the inner circumferential surface of the hole to be shielded so that the permeation of HC through the part made of common plastic material can be even more favourably controlled.

If the component part consists of two pieces, a mount base welded to the fuel tank main body and a component main body detachably attached to the mount base, the functional part of the component part which is mounted to the fuel tank can be repeatedly detached, and the maintenance work for the component part can be simplified.

To allow the two parts both made of weldable material to be welded together in such a manner as to achieve an adequate bonding strength without being interfered by the gasoline barrier layer, the method for making the plastic fuel tank may comprise the steps of preparing a component part having a peripheral part adapted to abut on the part surrounding the hole, the peripheral part defining an annular abutting surface defined by the first and second parts disposed concentrically one next to the other, the second part at the abutting surface projecting slightly beyond the first part of the abutting surface of the component part to the part surrounding the hole to such an extent that the first part at the abutting surface reaches at least to an immediate vicinity of the part surrounding the hole as a result of softening or melting of the second part at the abutting surface.

Thus, the end surface of the outer layer made of gasoline material can substantially abut the outer surface of the fuel tank for an optimum sealing result when the dimension of the weldable material is reduced as a result of softening or melting during the process of welding the weldable material to the fuel tank. The second part projecting beyond the first part of the abutting surface may define a convex surface or a slanted flat surface which is withdrawn on a slide adjacent to the first part. In particular, if the dimension of the step is determined so as to match the reduction in the dimension of the welded part of the weldable material so that the end surface of the outer layer of gasoline barrier material abuts the outer surface of the fuel tank when the weldable material is welded to the fuel tank, a particularly favourable result can be obtained in achieving the welding strength and gasoline barrier capability both in a satisfactory manner.

Alternatively, instead of having the second part of the abutting surface project slightly beyond the first part at the abutting surface, the second part at the abutting surface may define a concentric annular recess to achieve a same goal. The annular recess prevents the thermally softened gasoline barrier material from flowing toward the weldable material so that the gasoline material layer would not flow into the welding interface between the two parts both made of weldable material, and an adequate bonding strength can be achieved.

### BRIEF DESCRIPTION OF THE DRAWINGS

Now the present invention is described in the following with reference to the appended drawings, in which:
Figure 1 is a fragmentary longitudinal sectional view of an essential part of a first embodiment of the present invention;
Figure 2 is a view similar to Figure 1 showing a fuel tank not claimed in the present invention;
Figure 3 is a view similar to Figure 1 showing a third fuel tank not claimed in the present invention;
Figure 4 is a longitudinal sectional view showing a further embodiment of the present invention;
Figures 5 to 8 are enlarged sectional views showing various modifications of end surfaces of the component parts prepared for thermal welding; and
Figure 9 is a longitudinal sectional view showing a further embodiment of the present invention.

### DETAILED DESCRIPTION OF THE PREFERRED EMBODIMENTS

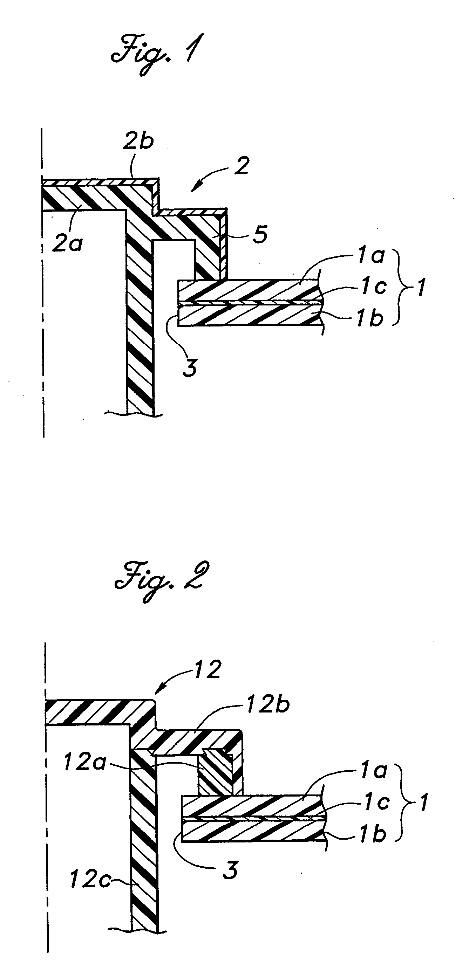

Figure 1 is a longitudinal sectional view of an essential part of a fuel tank embodying the present invention. Referring to Figure 1, the tank main body 1 is formed by a laminated structure having a barrier layer 1 c made of gasoline barrier material such as EVOH sandwiched and bonded between a pair of main material layers 1a and 1b made of common plastic material such as HDPE which is suitable for welding. A hole 3 is formed in an appropriate part of the tank main body 1 for mounting a separate component part 2 such as a filler neck or a breather pipe.

The component part 2 comprises a main part 2a made of common plastic material which is weldable or suitable for welding, an outer layer 2b directly exposed to the environment of the exterior of the tank and made of gasoline barrier material, and a flange 5 formed in an axially intermediate part of the component part 2 and adapted to closely engage a part of the outer surface of the tank main body 1 which is made of common plastic material and surrounds the hole 3. The main part 2a and outer layer 2b of the component part 2 may be integrally formed by coinjection or otherwise permanently joined to each other.

The flange 5 is provided with an annular end surface directed in an axially downward direction as seen in Figure 1. The outer surface of the tank main body 1 and the lower end surface of the flange 5 are integrally joined to each other by per se known thermal welding (see Japanese patent application No. 11-126639).

By thus covering the outer surface of the component part 2 which is directly exposed to the environment outside the tank main body 1 with the outer layer 2b made of gasoline barrier material, the barrier capability (capability to control the permeation of HC) that is required of the component part can be achieved. Because the main part 2a is made of common plastic material, the surface which is required to be thermally welded is made of the common plastic material, and the required bonding strength can be ensured. Furthermore, the part of the component part 2 made of the gasoline barrier material extends to the bonding surface for the tank main body 1 so that the barrier capability of the component part 2 can be achieved.

Only the outer layer 2b of the component part 2 which is exposed to the atmosphere was made of gasoline barrier material in the foregoing embodiment, but the barrier layer may also be formed on the internal surface of the component part 2 exposed to the interior of the tank main body or may be formed as an intermediate layer.

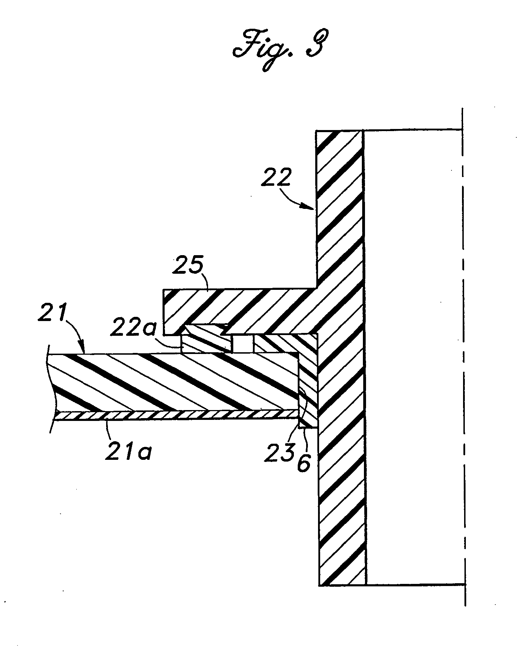

Figure 2 shows a second fuel tank not claimed in the present invention. Because the tank main body 1 is not different from that of the first embodiment, the parts corresponding to those of the first embodiment are denoted with like numerals without repeating description of such parts. The component part 12 of this embodiment comprises a first part 12b which directly separates the interior and exterior of the tank main body 1 from each other, a second part 12a which directly contacts the part of the tank main body 1 at the lower surface of the outer peripheral part of the first part 12b, and a third part 12c which is located substantially inside the tank main body 1, the first to third parts 12b, 12a and 12c being integrally formed by coinjection.

In this case also, because the first part 12b separating the interior and exterior of the tank main body 1 from each other is made of gasoline barrier material, it provides the gasoline barrier capability. Because the second part 12a directly engaging the outer surface of the tank main body 1 and thermally welded thereto is made of the common weldable plastic material, the required bonding strength can be ensured. In this case also, because the first part 12b made of gasoline barrier material extends to the bonding surface for the tank main body 1 along the outer circumference of the second part 12a, the barrier capability of the component part 12 can be achieved. The third part may be made of any material which is preferably resistant to fuel, and may not be made of gasoline barrier material.

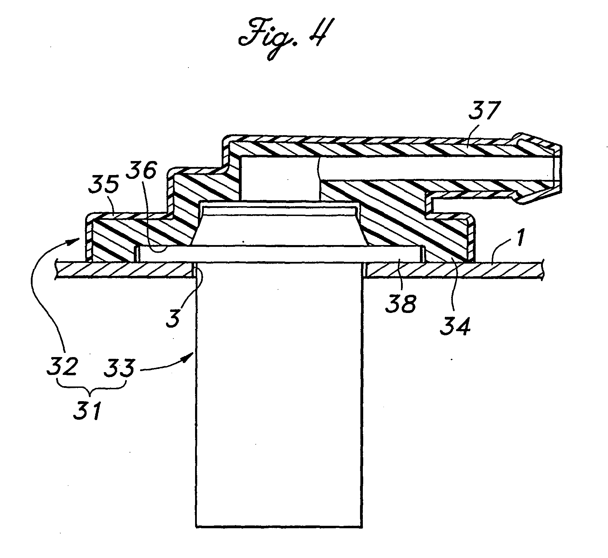

Figure 3 shows a third fuel tank not claimed in the present invention. In this case, the component part 22 is substantially entirely made of gasoline barrier material, and only an annular portion 22a on the lower surface of an outer peripheral part of the flange portion 25 is made of common plastic material. The two parts are integrally formed by coinjection.

The tank main body 21 has a two layered structure including a barrier layer 21 a formed on an inner surface thereof. A seal member 6 made of gasoline barrier material is interposed between the inner circumferential surface of the hole 23 of the tank main body 21 and the outer circumferential surface of the component part 22 fitted in the 23.

In this case, because the component part 22 which separates the interior and exterior of the tank main body 21 from each other is entirely made of gasoline barrier material, the barrier capability can be achieved. Because common plastic material is used for the annular portion 22a which engages the outer surface of the tank main body 21 made of the common plastic material is used for the annular portion 22a which engages the outer surface of the tank main body 21 made of the common material and is thermally welded thereto, the required bonding strength can be achieved. Furthermore, because the seal member 6 made of gasoline barrier material is interposed between the tank main body 21 and the corresponding part of the component part 22, the permeation of HC through the part of the tank main body 21 made of the common plastic material and exposed at the wall surface of the hole 23 can be substantially entirely avoided. The seal member 6 is preferably interposed between the inner circumferential surface of the hole 23 and the opposing part of the component part 22, but may also be interposed between a flange of the component part and the opposing surface of the tank main body which may be either the inner or outer surface thereof. In the base of the illustrated embodiment, the seal member 6 is interposed between the flange 25 and the outer surface of the tank main body 21 as well as between the inner circumferential surface of the hole 23 and the opposing part of the component part 22.

The evaporative emission standards of the state of California (LEV-II) require that the total fuel permeation of a component part mounted to a gasoline tank to be no more than 37.5 mg/day (measurement based on the MIN SHED - Sealed Housing for Evaporative Determination). The fuel permeation of a component part having its outer surface covered by a barrier layer was measured as illustrated in Figure 1. In the case of a component part using EVOH having a fuel permeation coefficient of 0.014 g-mm/m² per day at 40 °C, the fuel permeation of the component part was 0.04 mg/day. In the case of a component part using PA12 having a fuel permeation coefficient of 5.6 g-mm/m² per day at 40 °C, the fuel permeation of the component part was 14 mg/day. This test was repeated a number of times changing the external material each time. According to these tests, it was found that the LEV-II regulations can be met if the barrier layer is made of material having a fuel permeation coefficient of 15 g-mm/m² per day or less. The HC permeation coefficient was measured by the cup method which is described in the following.

A prescribed amount of gasoline fuel is filled into a flanged cylindrical cup made of impermeable metallic material, and a sheet made of the material to be tested is placed over the mouth of the cup. A disk formed with an opening having a prescribed area is placed over the sheet, and attached to the cup. The cup is subjected to a soak test at room temperature to 80 °C (to promote the permeation of the test fuel). The weight of the sample in this enclosed state is measured at the accuracy of 1 mmg, and thereafter measured at a regular interval again at the accuracy of 1 mmg at room temperature to 80 °C. The permeation of the sample fuel is given as a weight reduction rate (permeation coefficient) at the time when a saturation point is reached or the weight reduction rate has become constant. The barrier capability is evaluated according to the permeation coefficient.

Figure 4 shows an arrangement for mounting a vent valve 31 to a fuel tank main body 1 given as a further embodiment of the present invention. The fuel tank main body 1 is made by blow molding, and comprises at least a surface layer made of weldable material such as HDPE and a gasoline barrier material layer, and its upper wall is formed with a mounting hole 3 for the vent valve 31. The fuel tank main body 1 may not be different from those of the previous embodiments.

The vent valve 31 is normally open so as to release vapour in the space above the fuel surface to an external canister not shown in the drawings, but closes when the fuel level has reached a prescribed level by sloshing to prevent the fuel from flowing into the passage leading to the canister. The vent valve 31 is attached to the upper wall of the fuel tank main body 1 with a part of the vent valve located inside the fuel tank. Because this vent valve is not different from a per se known vent valve, its detailed description is omitted in this disclosure.

The vent valve comprises a valve function part 33 made of fuel resistant material such as polyacetal and a support base 32 made of weldable material such as HDPE that can be welded to the surface layer of the fuel tank main body 1. An upper part of the valve function part 33 is provided with a flange 38 which abuts the outer surface of the upper wall of the fuel tank main body 1.

The support base 32 is a disk-shaped and abuts the outer surface of the upper wall of the fuel tank main body 1. A hose joint 37 is provided in the upper part thereof for allowing communication with a canister. The support base 32 is integrally formed with an outer layer 35 made of gasoline barrier material such as EVOH over the entire surface thereof that is directly exposed to the environment outside the fuel tank, for instance, by coinjection. The surface of the support base 32 opposing the fuel tank main body 1 is formed with a recess 36 for closely receiving the part of the valve function part located above the flange 38, and it is contemplated to thermally weld the outer peripheral part 34 of the recess 36 to the outer surface of the fuel tank main body 1.

The support base 32 is welded to the fuel tank main body 1 so that the valve function part 33 is fixed to the fuel tank main body 1 via the support base 32. The welding can be executed by making use of a known thermal welding process which may consist of thermally softening the projecting lower surface of the outer peripheral part 34 of the recess 36 and pressing it against the fuel tank main body 1 with the flange 38 of the valve function part 33 interposed between the opposing surfaces of the support base 32 and the upper wall of the fuel tank main body 1.

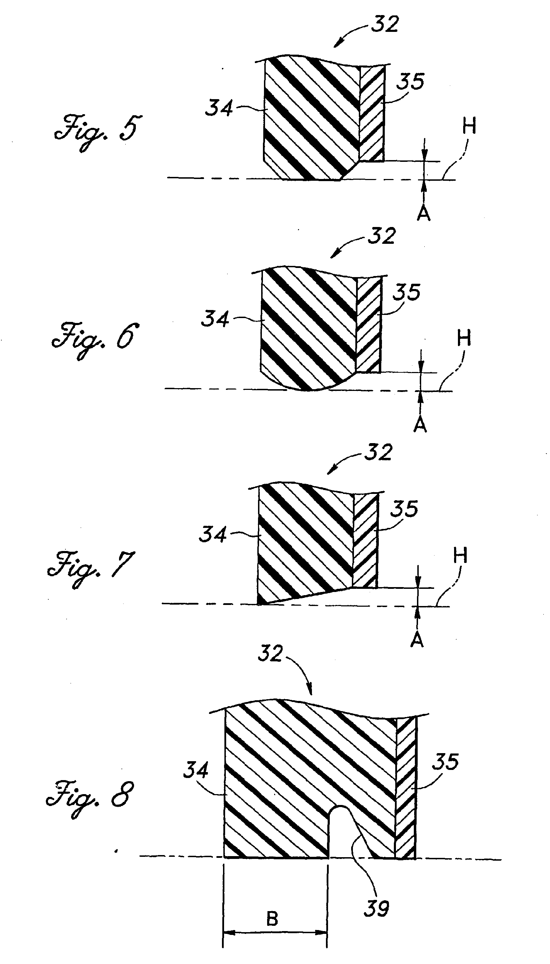

A step as indicated by dimension A in Figure 5 is defined between the lower end surface of the outer peripheral part 34 of the support base 32 and the lower end surface of the outer layer 35 prior to welding the support base 32 to the fuel tank main body 1. The step dimension A is so determined as to match the reduction in the dimension of the lower surface of the outer peripheral part 34 when it is heated by applying a heater H and pushed against the fuel tank main body 1.

If the step dimension A is excessive, although the bonding strength of the welded part can be ensured, the gasoline barrier capability is compromised because of the resulting gap between the lower end surface of the outer layer 35 and the outer surface of the fuel tank main body 1. If no such step is provided in the end surface of the peripheral part 34, the outer layer 35 made of gasoline barrier material and softened by the heater H may flow into the weld interface between the peripheral part 34 and the opposing surface of the fuel tank main body 1, and this may significantly impair the quality of welding between them.

It is therefore most preferable to determine the dimension A so as to allow the lower end surface of the outer layer 35 to jus engage the outer surface of the fuel tank main body 1 when the outer peripheral part 9 made of the weldable plastic material is finally welded to the outer surface of the fuel tank main body 1. In view of the inevitable manufacturing errors and variations in the dimensional reduction of the peripheral part 34 as a result of welding, it is difficult to achieve both the welding of the outer peripheral part 9 and the engagement of the end surface of the outer layer 35 in a precise manner. However, it has been experimentally established that the interference of the outer layer 35 with the weld interface can be avoided to an extent necessary to ensure a reasonable mechanical strength of the welded part simply by providing the step in such a manner as to allow the outer peripheral part to engage the heater H slightly before the lower surface of the outer layer 35 does.

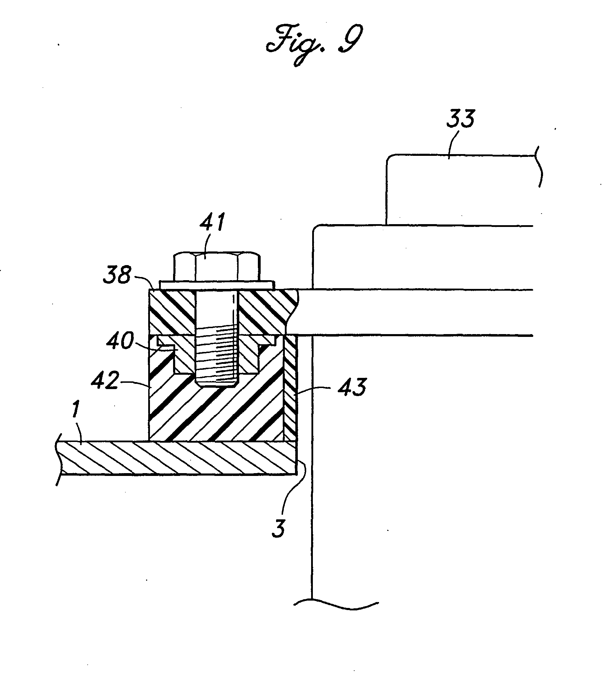

The outer peripheral part 34 can be made to project beyond the end surface of the outer layer 35 in any manner as long as the outer peripheral part 34 engages the heater H before the outer layer 35 does when the support base 32 is applied to the heater H immediately before welding. For instance, the end surface of the outer peripheral part 34 may have a rounded convex shape as shown in Figure 6, or a slanted flat surface which is withdrawn on the side adjoining the outer layer 35 as shown in Figure 7.

By thus forming the outer layer 35 provided in the support base 32 with gasoline barrier material, and withdrawing the outer layer 35 to such an extent as not to interfere with the welding of the outer peripheral part 34, the required bonding strength can be ensured, and the gasoline barrier capability (the capability to prevent permeation of HC) that is required of the component part can be achieved at the same time because the part made of the gasoline barrier material substantially reaches the outer surface of the fuel tank main body 1, and the weldable part of the support base 32 is prevented from contacting the environment outside the fuel tank.

Figure 8 shows yet another modification from the embodiment illustrated in Figure 5. In this embodiment, an annular recess 39 is formed in a part of the surface of the outer peripheral part 34 of the support base 32 made of weldable material and adapted to engage the heater H adjacent to the outer layer 35 to allow the molten weldable material to flow into the annular recess 39. The dimension of the effective welding width B of the outer peripheral part 34 is determined so that an adequate welding strength can be achieved.

According to this arrangement, when the support base 32 is pressed against the fuel tank main body 1 while the outer layer 35 is softened as a result of a contact with the heater H, the tendency of the softened outer layer 35 to flow into the interface between the weldable material and fuel tank main body 1 is opposed by the pressure of the molten weldable material flowing into the annular recess 39. As a result, the interference of the gasoline barrier material layer with the welding of the weldable material layer with the fuel tank main body 1 can be avoided.

Figure 9 shows a further embodiment of the present invention. In this embodiment, the component part comprises a function part 33 which is received in the mounting hole 3 of the fuel tank main body and provided with a radial flange 38 located outside the fuel tank main body 1, and an annular support base 42 which is interposed between the flange 38 and the outer surface of the tank main body 1. The annular support base 42 is directly welded to the fuel tank main body 1 around the hole 3, and the nuts 40 are insert molded therein along a common circle. The inner circumferential surface of the support base 42 is formed with an outer layer 35 made of gasoline barrier material.

In this case also, the welding surface of the support base 42 for the fuel tank main body 1 may be provided with a step as illustrated in Figures 5 to 7 or an annular recess 39 as illustrated in Figure 8 so that the strength of the welded part of the support base 42 is prevented from being impaired.

The valve function part 33 is made of gasoline barrier material, and is fixed to the support base 42 by passing threaded bolts 14 through the flange 38 and threading with the inserted nuts 40 so that the valve function part 33 can be detachably mounted to the fuel tank main body 1.

Because the outer layer 32 is only required to prevent gasoline vapor from being released to the atmosphere, it may be provided only on the side exposed to the atmosphere as illustrated in Figure 4 or on the side exposed to the environment inside the fuel tank as illustrated in Figure 9. In short, it may be provided on either side which provides an optimum gasoline barrier property depending on the configuration of the component part.

Although the present invention has been described in terms of preferred embodiments thereof, it is obvious to a person skilled in the art that various alterations and modifications are possible without departing from the scope of the present invention which is set forth in the appended claims.

## Claims

1. A plastic fuel tank; comprising:
a main body (1) having a laminated structure including a layer (1c) made of gasoline barrier material, an outer layer (1a) made of weldable plastic material and a hole (3) formed in said main body so as to communicate the interior and
exterior of said tank main body with each other; and a component part (2, 33) fitted in said hole, said component part including a first part (2b, 35, 43) made of gasoline barrier material extending across said component part so as to substantially separate the interior and exterior of said tank main body from
each other and a second part (2a, 34, 42) made of weldable plastic material provided in a peripheral part of said component part at which said second part
is welded to a part of said outer layer of said tank main body surrounding said hole **characterised in that**:
said first part of said component part made of the gasoline barrier material includes an outer or inner layer (2b, 35, 43) of said component part which is formed over said second part and extends to the welding surface of the tank main body.

2. A plastic fuel tank according to claim 1, wherein said gasoline barrier material of said component part has a HC permeability coefficient of 15 g-mm/m² per day or less at 40°C.

3. A method for making a plastic fuel tank comprising a main body (1) having a laminated structure including a layer (1c) made of gasoline barrier material, an outer layer (1a) made of weldable plastic material and a hole (3) formed in said main body so as to communicate an interior and exterior of said tank main body with each other; and a component part (2) fitted in said hole, said component part including a first part (35) made of gasoline barrier material extending across said component part so as to substantially separate the interior and exterior of said tank main body from each other and a second part (34) made of weldable plastic material provided in a peripheral part of said component part at which said second part is welded to a part of said outer layer of said tank main body surrounding said hole, said method comprising the steps of:
preparing a component part having a peripheral part adapted to abut on said part surrounding said hole, said peripheral part defining an annular abutting surface defined by said first and second parts disposed concentrically one next to the other, said second part at said abutting surface projecting slightly beyond said first part at said abutting surface; and
thermally welding said abutting surface of said second part to said part surrounding said hole to such an extent that said first part at said abutting surface reaches at least to an immediate vicinity of said part surrounding said hole as a result of softening or melting of said second part at said abutting surface.

4. A method for making a plastic fuel tank comprising a main body (1) having a laminated structure including a layer (1c) made of gasoline barrier material, an outer layer (1a) made of weldable plastic material and a hole (3) formed in said main body so as to communicate an interior and exterior of said tank main body with each other; and a component part (2) fitted in said hole, said component part (2) including a first part (35) made of gasoline barrier material extending across said component part so as to substantially separate the interior and exterior of said tank main body from each other and a second part (34) made of weldable plastic material provided in a peripheral part of said component part at which said second part is welded to a part of said outer layer of said tank main body surrounding said hole, said method comprising the steps of:
preparing a component part having a peripheral part adapted to abut on said part surrounding said hole, said peripheral part defining an annular abutting surface defined by said first and second parts disposed concentrically one next to the other, said second part at said abutting surface defining a concentric annular recess (39); and second
thermally welding said abutting surface of said second part to said part surrounding said hole to such an extent that said first part at said abutting surface bends and lies over said part surrounding said hole without interfering with the welding of said abutting surface of said component part to said part surrounding said hole as a result of softening or melting of said second part at said abutting surface.

5. A plastic fuel tank according to claim 1 wherein, said peripheral part defines an annular abutting surface defined by said first and second parts disposed concentrically one next to the other, said second part at said abutting surface projecting slightly beyond said first part at said abutting surface.

6. A plastic fuel tank according to claim 5 wherein, said second part projecting beyond said first part at said abutting surface defines a convex surface.

7. A plastic fuel tank according to claim 5, wherein said second part projecting beyond said first part at said abutting surface defines a slanted flat surface which is withdrawn on a side adjacent to said first part.

8. A plastic fuel tank according to claim 1 wherein, said peripheral part defines an annular abutting surface defined by the said first and second parts disposed concentrically one next to the other, said second part at said abutting surface defining a concentric annular recess (39).

## Patentansprüche

1. Kraftstofftank aus Kunststoff umfassend:
- einen Hauptkörper (1) mit einer Schichtstruktur, die eine Schicht (1c) aus einem Benzinsperrenden Material, eine Außenschicht (1a) aus einem schweißbaren Kunststoffmaterial sowie eine Öffnung (3), die in dem Hauptkörper ausgebildet ist, um das Innere und das Äußere des Hauptkörpers des Tanks miteinander zu verbinden, umfasst; und
- ein in die Öffnung eingepasstes Spritzgussteil (2, 33), wobei das Spritzgussteil ein erstes Teil (2b, 35, 43), das aus einem Benzinsperrenden Material besteht und sich über das Spritzgussteil erstreckt, um auf diese Weise das Innere und das Äußere des Hauptkörpers des Tanks im Wesentlichem voneinander zu trennen, sowie ein zweites Teil (2a, 34, 42) umfasst, das aus schweißbarem Kunststoffmaterial besteht und in einem peripheren Bereich des Spritzgussteils vorgesehen ist, an dem das zweite Teil an einem die Öffnung umgebenden Teil der Außenschicht des Hauptkörpers des Tanks angeschweißt ist,
**dadurch gekennzeichnet, dass**
das aus dem Benzinsperrenden Material hergestellte erste Teil des Spritzgussteils eine Außen- oder Innenschicht (2b, 35, 43) des Spritzgussteils umfasst, die über dem zweiten Teil ausgebildet ist und sich zu der Schweißoberfläche des Hauptkörpers des Tanks erstreckt.

2. Kraftstofftank aus Kunststoff nach Anspruch 1,
wobei das Benzinsperrende Material des Spritzgussteils bei 40°C einen Permeabilitätskoeffizienten für Kohlenwasserstoffe von 15 g-mm/m² pro Tag oder weniger aufweist.

3. Verfahren zur Herstellung eines Kraftstofftanks aus Kunststoff umfassend:
- einen Hauptkörper (1) mit einer Schichtstruktur, die eine Schicht (1 c) aus einem Benzinsperrenden Material, eine Außenschicht (1a) aus einem schweißbaren Kunststoffmaterial sowie eine Öffnung (3), die in dem Hauptkörper ausgebildet ist, um das Innere und das Äußere des Hauptkörpers des Tanks miteinander zu verbinden, umfasst; und
- ein in die Öffnung eingepasstes Spritzgussteil (2, 33), wobei das Spritzgussteil ein erstes Teil (35), das aus einem Benzinsperrenden Material besteht und sich über das Spritzgussteil erstreckt, um auf diese Weise das Innere und das Äußere des Hauptkörpers des Tanks im Wesentlichen voneinander zu trennen, sowie ein zweites Teil (34) umfasst, das aus schweißbarem Kunststoffmaterial besteht und in einem peripheren Bereich des Spritzgussteils vorgesehen ist, an dem das zweite Teil an einem die Öffnung umgebenden Teil der Außenschicht des Hauptkörpers des Tanks angeschweißt ist,
wobei das Verfahren die folgenden Schritte umfasst:
- Vorbereiten eines Spritzgussteils mit einem peripheren Bereich, der dazu ausgelegt ist, an dem die Öffnung umgebenden Teil anzuliegen, wobei der periphere Bereich eine durch das erste und zweite Teil, die zueinander konzentrisch angeordnet sind, gebildete, ringförmige Anlagefläche begrenzt und wobei das zweite Teil an der Anlagefläche geringfügig über das erste Teil an der Anlagefläche hervorsteht; und
- thermisches Verschweißen der Anlagefläche des zweiten Teils mit dem die Öffnung umgebenden Teil, wobei das Schweißen in einem Ausmaß durchgeführt wird, dass das erste Teil an der Anlagefläche aufgrund des Erweichens oder Schmelzens des zweiten Teils an der Anlagefläche zumindest eine unmittelbare Nähe zu dem die Öffnung umgebenden Teil erreicht.

4. Verfahren zur Herstellung eines Kraftstofftanks aus Kunststoff umfassend:
- einen Hauptkörper (1) mit einer Schichtstruktur, die eine Schicht (1 c) aus einem Benzinsperrenden Material, eine Außenschicht (1a) aus einem schweißbaren Kunststoffmaterial sowie eine Öffnung (3), die in dem Hauptkörper ausgebildet ist, um das Innere und das Äußere des Hauptkörpers des Tanks miteinander zu verbinden, umfasst; und
- ein in die Öffnung eingepasstes Spritzgussteil (2), wobei das Spritzgussteil (2) ein erstes Teil (35), das aus einem Benzinsperrenden Material besteht und sich über das Spritzgussteil erstreckt, um auf diese Weise das Innere und das Äußere des Hauptkörpers des Tanks im Wesentlichen voneinander zu trennen, sowie ein zweites Teil (34) umfasst, das aus schweißbarem Kunststoffmaterial besteht und in einem peripheren Bereich des Spritzgussteils vorgesehen ist, an dem das zweite Teil an einem die Öffnung umgebenden Teil der Außenschicht des Hauptkörpers des Tanks angeschweißt ist,
wobei das Verfahren die folgenden Schritte umfasst:
- Vorbereiten eines Spritzgussteils mit einem peripheren Bereich, der dazu ausgelegt ist, an dem die Öffnung umgebenden Teil anzuliegen, wobei der periphere Bereich eine durch das erste und zweite Teil, die zueinander konzentrisch angeordnet sind, gebildete, ringförmige Anlagefläche begrenzt und wobei das zweite Teil an der Anlagefläche eine konzentrische ringförmige Aussparung (39) bildet; und
- Thermisches Verschweißen der Anlagefläche des zweiten Teils mit dem die Öffnung umgebenden Teil, wobei das Schweißen in einem Ausmaß durchgeführt wird, dass das erste Teil an der Anlagefläche aufgrund des Erweichens oder Schmelzens des zweiten Teils an der Anlagefläche sich an der Anlagefläche blegt und über das die Öffnung umgebende Teil zum Liegen kommt, ohne das Verschweißen der Anlagefläche des Spritzgussteils mit dem die Öffnung umgebenden Teil zu beeinflussen.

5. Kraftstofftank aus Kunststoff nach Anspruch 1,
wobei der periphere Bereich eine durch das erste und zweite Teil, die zueinander konzentrisch angeordnet sind, gebildete, ringförmige Anlagefläche begrenzt, wobei das zweite Teil an der Anlagefläche geringfügig über das erste Teil an der Anlagefläche hervorsteht.

6. Kraftstofftank aus Kunststoff nach Anspruch 5,
wobei das über das erste Teil an der Anlagefläche hervorstehende zweite Teil eine konvexe Fläche bildet.

7. Kraftstofftank aus Kunststoff nach Anspruch 5,
wobei das über das ersten Teil an der Anlagefläche hervorstehende zweite Teil eine abgeschrägte flache Oberfläche bildet, die auf einer zu dem ersten Teil benachbarten Seite zurückgezogen ist.

8. Kraftstofftank aus Kunststoff nach Anspruch 1,
wobei der periphere Bereich eine durch das erste und zweite Teil, die zueinander konzentrisch angeordnet sind, gebildete, ringförmige Anlagefläche begrenzt, wobei das zweite Teil an der Anlagefläche eine konzentrische ringförmige Aussparung (39) bildet.

## Revendications

1. Réservoir de carburant en matière plastique, comprenant :
- un corps principal (1) présentant une structure stratifiée comprenant une couche (1c) constituée de matériau barrière d'essence, une couche extérieure (1a) constituée de matière plastique soudable, et un orifice (3) formé dans le corps principal pour faire communiquer ensemble l'intérieur et l'éxtérieur du corps principal du réservoir, et
- une partie composante (2, 33) adaptée dans l'orifice, cette partie composante comprenant une première partie (2b, 35, 43) constituée de matériau barrière d'essence, s'étendant en travers de la partie composante de manière à séparer essentiellement l'un de l'autre l'intérieur et l'extérieur du corps principal du réservoir, ainsi qu'une seconde partie (2a, 34, 42) constituée de matière plastique soudable, prévue dans une partie périphérique de la partie composante dans laquelle la seconde partie est soudée à une partie de la couche extérieure du corps principal du réservoir entourant l'orifice,
**caractérisé en ce que**
la première partie de 1a partie composante, constituée du matériau barrière d'essence, comprend une couche extérieure ou intérieure (2b, 35, 43) de cette partie composante, qui est formée sur la seconde partie et s'étend jusqu'à la surface de soudage du corps principal du réservoir.

2. Réservoir de carburant en matière plastique selon la revendication 1, dans lequel
le matériau barrière d'essence de la partie composante présente un coefficient de perméabilité aux HC de 15 g-mm/m² par jour ou moins, à 40°C.

3. Procédé de fabrication d'un réservoir de carburant en matière plastique comprenant :
- un corps principal (1) présentant une structure stratifiée comprenant une couche (1c) constituée de matériau barrière d'essence, une couche extérieure (1a) constituée de matière plastique soudable, et un orifice (3) formé dans le corps principal pour faire communiquer ensemble l'intérieur et l'extérieur du corps principal du réservoir d'essence, et
- une partie composante (2) adaptée dans l'orifice, cette partie composante comprenant une première partie (35) constituée de matériau barrière d'essence, s'étendant en travers de la partie composante de manière à séparer essentiellement l'un de l'autre l'intérieur et l'extérieur du corps principal du réservoir d'essence, et une seconde partie (34) constituée de matière plastique soudable, prévue dans une partie périphérique de la partie composante dans laquelle la seconde partie est soudée à une partie de la couche extérieure du corps principal du réservoir entourant l'orifice,
**caractérisé en ce qu'**
il comprend les étapes consistant à :
- préparer une partie composante munie d'une partie périphérique destinée à buter sur la partie entourant l'orifice, cette partie périphérique formant une surface de butée annulaire définie par les première et seconde parties disposées concentriquement l'une à côté de l'autre, la seconde partie faisant saillie légèrement au-delà dé la première partie à l'endroit de la surface de butée, et
- souder thermiquement la surface de butée de la seconde partie, à la partie entourant l'orifice, dans une mesure telle que la première partie, à l'endroit de la surface de butée, arrive au moins au voisinage immédiat de la partie entourant l'orifice, du fait du ramollissement ou de la fusion de la seconde partie à l'endroit de la surface de butée.

4. Procédé de fabrication d'un réservoir de carburant en matière plastique comprenant :
- un corps principal (1) présentant une structure stratifiée comprenant une couche (1c) constituée de matériau barrière d'essence, une couche extérieure (1a) constituée de matière plastique soudable, et un orifice (3) formé dans le corps principal pour faire communiquer ensemble l'intérieur et l'extérieur du corps principal du réservoir d'essence, et
- une partie composante (2) adaptée dans l'orifice, cette partie composante (2) comprenant une première partie (35) constituée de matériau barrière d'essence, s'étendant en travers de la partie composante de manière à séparer essentiellement l'un de l'autre l'intérieur et l'extérieur du corps principal du réservoir d'essence, et une seconde partie (34) constituée de matière plastique soudable, prévue dans une partie périphérique de la partie composante dans laquelle la seconde partie est soudée à une partie de la couche extérieure du corps principal du réservoir entourant l'orifice,
**caractérisé en ce qu'**
il comprend les étapes consistant à :
- préparer une partie composante munie d'une partie périphérique destinée à buter sur la partie entourant l'orifice, cette partie périphérique formant une surface de butée annulaire définie par les première et seconde parties disposées concentriquement l'une à côté de l'autre, la seconde partie définissant un évidement annulaire concentrique (39) à l'endroit de la surface de butée, et
- souder thermiquement la surface de butée de la seconde partie, à la partie entourant l'orifice, dans une mesure telle que la première partie, à l'endroit de la surface de butée, se courbe et vienne reposer sur la partie entourant l'orifice, sans perturber la soudure de la surface de butée de la partie composante, à la partie entourant l'orifice, du fait du ramollissement ou de la fusion de la seconde partie à l'endroit de la surface de butée.

5. Réservoir de carburant en matière plastique selon la revendication 1, dans lequel
La partie périphérique forme une surface de butée annulaire définie par les première et seconde parties disposées concentriquement l'une à côté de l'autre, la seconde partie faisant saillie légèrement au-delà de la première partie à l'endroit de la surface de butée.

6. Réservoir de carburant en matière plastique selon la revendication 5, dans lequel
La seconde partie faisant saillie au-delà de la première partie à l'endroit de la surface de butée, définit une surface convexe.

7. Réservoir de carburant en matière plastique selon la revendication 5, dans lequel
la seconde partie faisant saillie au-delà de la première partie à l'endroit de la surface de butée, définit une surface plate inclinée qui est retirée du côté adjacent à la première partie.

8. Réservoir de carburant en matière plastique selon la revendication 1, dans lequel
la partie périphérique forme une surface de butée annulaire définie par les première et seconde parties disposées concentriquement l'une à côté de l'autre, la seconde partie définissant un évidement annulaire concentrique (39) à l'endroit de la surface de butée.
